# EUROPEAN PATENT SPECIFICATION

(11) **EP 3 228 771 B1**
(45) Date of publication and mention of the grant of the patent: **09.01.2019**
(21) Application number: 17152560.3
(22) Date of filing: 23.01.2017
(51) Int. Cl.: E04B 2/18, E04B 2/20, C04B 33/132, E04B 2/02

(54) **GREEN-MATERIAL LIGHT-PARTITION EARTHENWARE BRICK**
STEINGUTZIEGEL AUS GRÜNMATERIAL FÜR LEICHTE TRENNWÄNDE
BRIQUE DE TERRE CUITE EN MATÉRIAU ÉCOLOGIQUE POUR LA CONSTRUCTION DE CLOISONS LÉGÈRES

(30) Priority: 04.02.2016 TW 105103687
(43) Date of publication of application: 11.10.2017
(73) Proprietor: Huang, Chia-Chaei, Changhua County 515 (TW)
(72) Inventor: Huang, Chia-Chaei, Changhua County 515 (TW)
(74) Representative: Cabinet Chaillot

(56) References cited:
- EP-A1- 0 059 820
- FR-A- 904 106
- GB-A- 231 946
- GB-A- 1 534 501

## Description

### CROSS-REFERENCE TO RELATED APPLICATION

### Background of the invention

### 1. Field of the invention

The present disclosure relates to a green-material light-partition earthenware brick, particularly an environment-friendly, practical and innovative green-material light-partition earthenware brick.

### 2. Description of the prior art

In addition to conventional construction methods including bricklaying or concrete grouting, hollow bricks which are taken as building materials featuring light-weight hollow structures and insulating heat and sound have been laid in more and more buildings' walls for effects of heat and sound insulations.

However, a wall constructed with existing hollow bricks which feature planar appearances despite changes in inner structural layouts joins a beam column imperfectly, weakening earthquake resistance of a building but complicating construction due to combinations of bricks troublesome.

With cement, gravel, sand and water mixed pro rata, an ordinary cemented hollow brick is manufactured in a molding process for a specific structure. In bricklaying, hollow bricks stacked as upper and lower layers between which cement or similar binder is applied in advance are securely fixed after cement or adhesive dries out.

Cemented hollow bricks manufactured and molded by mixing cement, gravel and sand which obviously imperil natural ecology in exploiting processes are non-recycled or not taken as environment-friendly building materials. Because of weights of raw materials, a cemented hollow brick with a hollow structure internally is still heavy enough and inconveniently laid or transported; moreover, a structure which is constructed with hollow bricks fixed by cement or similar binder may come short of sufficient structural strength and earthquake resistance. Thus, conventional hollow bricks which are unideal building materials should be corrected by persons skilled in the art.

A green-material light-partition earthenware brick according to the preamble of claim 1 is known from GB 231 946 A.

### Summary of the invention

The patent applicant, who considered conventional solid bricks, hollow bricks or cemented solid bricks not environment-friendly and weak in robustness and earthquake resistance after bricklaying and worse industrial applications as well as practical values, started researching hollow bricks and developed green-material light-partition earthenware bricks according to long-term experiences and skills in the industry.

For no existing problem or drawback of a conventional hollow brick, any green-material light-partition earthenware brick made of recycled materials such as surplus earth, sludge derived from water purification, industrial sludge, potter's clay and ordinary clay in a molding process comprises: at least a first rib and at least a first groove, both of which are staggered on the top surface; at least a second groove on the bottom surface and opposite to the first rib and at least a second rib on the bottom surface and opposite to the first groove. A green-material light-partition earthenware brick, which relies on the first rib and the first groove to match a second groove and a second rib on another brick, further comprises a first dovetail slot on the top center and a second dovetail slot cut on the bottom center and opposite to the first dovetail slot. In addition to first ribs and first grooves on lower-layered stacked hollow bricks matching second grooves and second ribs on top-layered stacked hollow bricks, elongate connecting rods are embedded into those opposite first and second dovetail slots for vertical and horizontal combinations of the hollow bricks laid on upper and lower layers and connected lengthwise. Moreover, a wall constructed with green-material light-partition earthenware bricks is able to join beam columns for better earthquake resistance effect.

As a hollow brick in conformity with manufacturing standards of environment and green building material, the green-material light-partition earthenware brick is designed to have concave grooves and convex ribs on top and bottom surfaces for easy conjunction in a bricklaying process and dovetail slots in which elongate connecting rods are centrally held so that hollow bricks laid on upper and lower layers and connected lengthwise are securely stacked for vertical and horizontal combinations and development of a wall joining main beam columns. As such, a wall is robust in structure and performs well in earthquake resistance without drawbacks of conventional hollow bricks.

The invention relates to a green-material light-partition earthenware brick, made of sludge in a molding process, comprising a plurality of hollow cores, coordinating a plurality of elongate connecting rods for development of a wall constructed between a building's two beam columns or in a building's skeleton, and wherein a hollow brick, which comprises concave grooves and convex ribs staggered on top and bottom surfaces and matching ribs and grooves on another hollow brick and dovetail slots corresponding to each other at top and bottom centers so that hollow bricks stacked as upper and lower layers are securely combined with the concave grooves and the convex ribs matching each other, binder applied in between, and the elongate connecting rods held in the corresponding dovetail slots for vertical and horizontal combinations of hollow bricks laid on upper and lower layers and connected lengthwise and development of a wall joining main beam columns.

### Brief description of the drawings

FIG. 1 is a schematic view illustrating structure of a green-material light-partition earthenware brick in a preferred embodiment;
FIG. 2 is a schematic view illustrating exploded green-material light-partition earthenware bricks in a preferred embodiment;
FIG. 3 is a schematic view illustrating combined green-material light-partition earthenware bricks in a preferred embodiment;
FIG. 4 is another schematic view illustrating combined green-material light-partition earthenware bricks in a preferred embodiment;
FIG. 5 is a schematic view illustrating the correlation of two combined green-material light-partition earthenware bricks in a preferred embodiment;
FIG. 6 is a schematic view illustrating structure of a green-material light-partition earthenware brick, which is however not covered by the appended claims;
FIG. 7 is a schematic view illustrating structure of a green-material light-partition earthenware brick, which is however not covered by the appended claims;
FIG. 8 is a schematic view which illustrates green-material light-partition earthenware bricks match concrete columns, a ceiling and a floor in a preferred embodiment;
FIG. 9 is a schematic view which illustrates green-material light-partition earthenware bricks match a concrete column, a steel beam column, a ceiling and a floor in a preferred embodiment.

### Detailed description of the preferred embodiment

A green-material light-partition earthenware brick is specifically described in embodiments and accompanying figures hereinafter for clearly understanding structure, technical measures and efficiency.

First embodiment: sludge or settled sludge (mass fraction: more than 50%) and clay (mass fraction: less than 50%) as raw materials are pulverized and mixed; green bodies are manufactured by a vacuum extruder in a compression molding process and further sintered in a tunnel kiln at 1000∼1300 °C for generation of green-material light-partition earthenware bricks.

Second embodiment: sludge and potter's clay (mass fraction: more than 50%) and clay (mass fraction: less than 50%) as raw materials are pulverized and mixed; green bodies are manufactured by a vacuum extruder in a compression molding process and further sintered in a tunnel kiln at 1000∼1300 °C for generation of green-material light-partition earthenware bricks.

A green-material light-partition earthenware brick is a hollow brick 10 comprising a top surface with multiple convexes formed by a plurality of convex bodies, a junction surface located at the bottom and matching the top surface's topography, and a pair of concave dovetail slots 15, 16 which are symmetric to each other and formed on the top and bottom surfaces of the hollow brick 10, respectively.

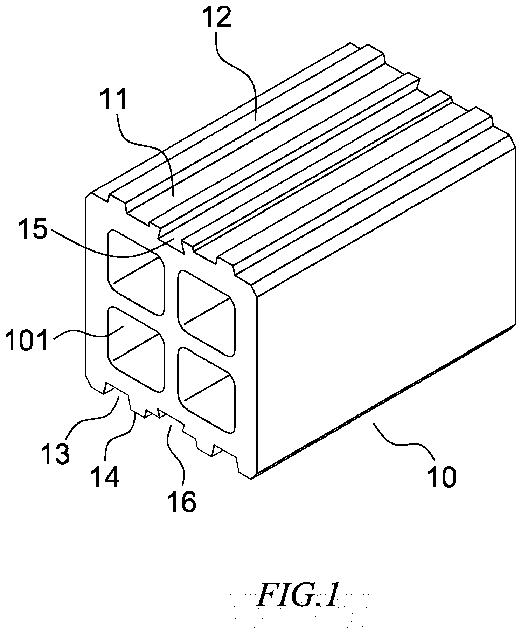

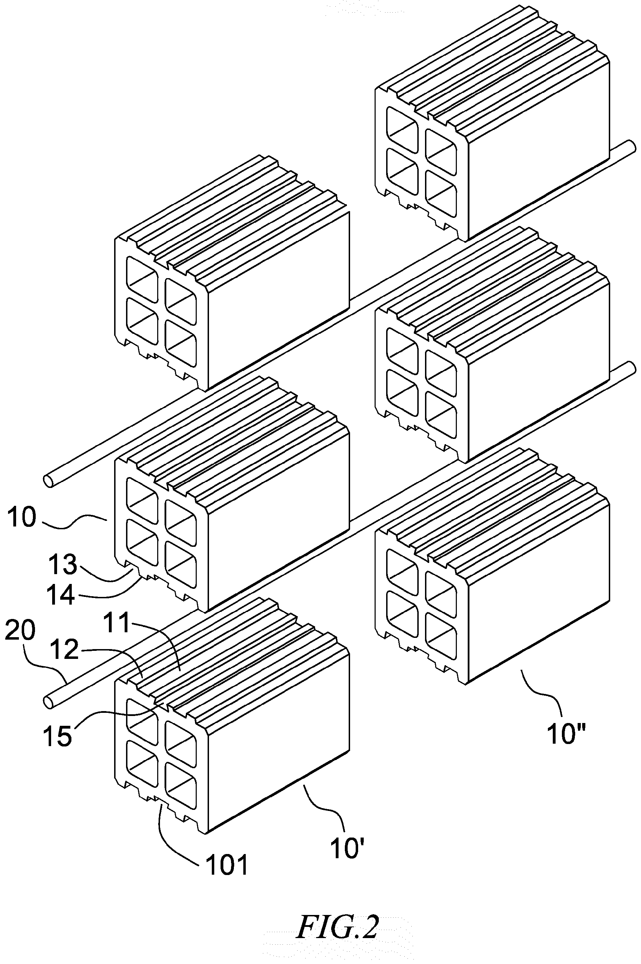

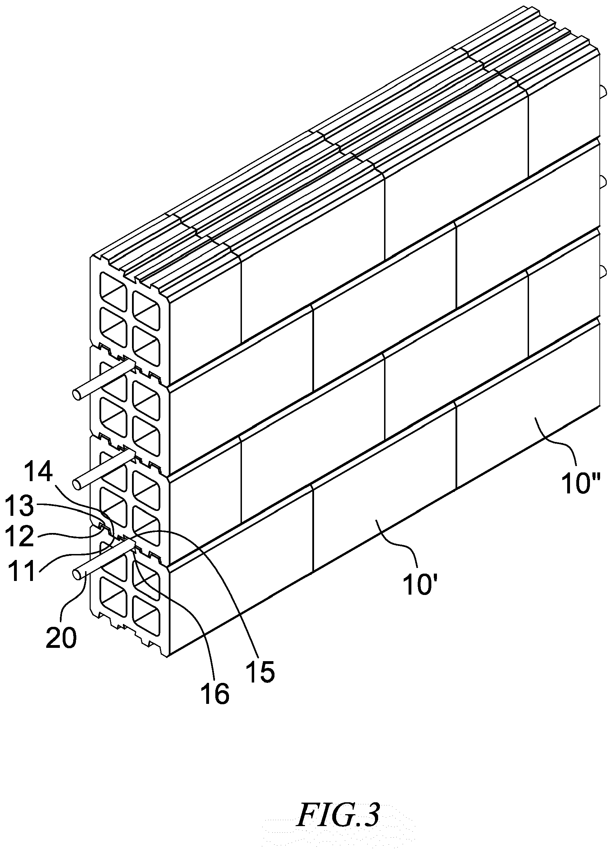

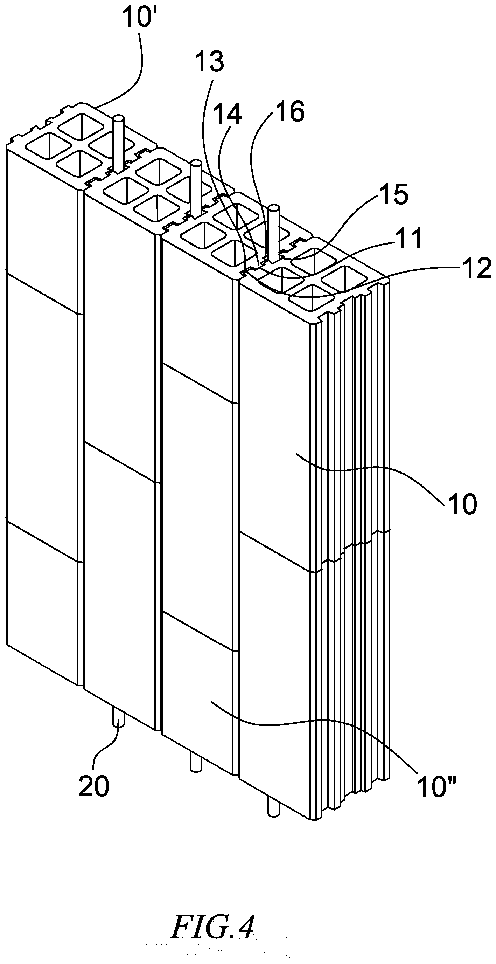

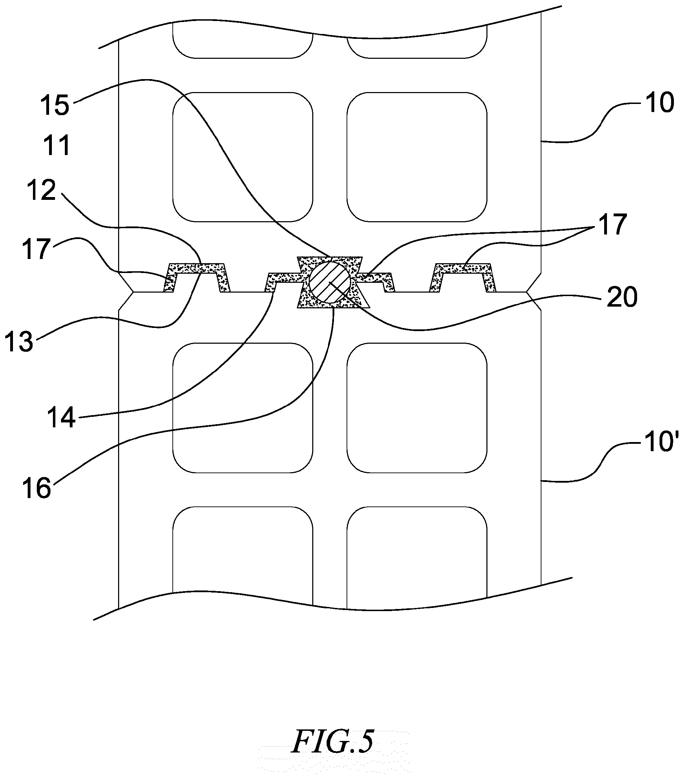

Referring to FIG. 1 to FIG. 7 for a green-material light-partition earthenware brick in a preferred embodiment. As shown in FIG. 1 to FIG. 5, green-material light-partition earthenware bricks in structural design are made of sludge recycled (mass fraction: more than 50%) such as surplus earth, sludge derived from drinking water purification, industrial waste sludge, legal sludge, potter's clay, and general clay as raw materials to be pulverized and mixed pro rata, extruded by a vacuum extruder, formed in different types of molds, and sintered for distinct sizes and shapes of hollow bricks 10. As recyclable materials without troublesome soil contamination, sludge accords with criteria for environment-friendly green building materials and concrete hollow bricks (CNS 8905). A hollow brick 10 has an inside layout like a grating with four hollow cores 101 for effects of sound and heat insulations and light structure as expected. The main ingredients of sludge used in a green-material light-partition earthenware brick are silica (SiO₂), aluminum oxide (Al₂O₃) and ferric oxide (Fe₂O₃), all of which account for 70%∼90% approximately and are similar to ingredients in clay for manufacturing of bricks.

In a green-material light-partition earthenware brick, the hollow cores 101 can be arranged as but not limited to square holes, two rectangular holes, multi-rectangular holes, circular holes, etc; moreover, the green-material light-partition earthenware brick can be a square or rectangular hollow brick 10.

According to a preferred embodiment, the first lateral surface of the hollow brick 10 at 30°C is irradiated and heated to 50°C in more than 60 minutes by a 300W infrared light and the second lateral surface is kept at 43°C∼47°C. As such, temperature on the second lateral surface of the hollow brick 10 facing indoor space is reduced by 3°C∼6°C effectively and kept for a longer period due to the hollow cores 101 in the hollow brick 10 when the first lateral surface is heated to over 50°C outdoors in summer. Comparatively, temperature on the second lateral surface facing indoor space is raised by 3°C∼6° C in winter.

Each of the hollow bricks 10 laid and combined according to multi-convex topography with a plurality of convex bodies on top and bottom surfaces comprises concave grooves 11 and adjacent convex ribs 12 on the top surface, which match corresponding ribs 14 and grooves 13 on the bottom surface, respectively. The number of concave grooves and convex ribs on top and bottom surfaces can be increased or decreased correspondingly; each of the grooves 11, 13 (or each of the ribs 12, 14) include, without limitation, oblique guide planes or circular or square chamfers at two side edges (not shown in figures) by which hollow bricks 10 are stacked on each other and as upper and lower layers. For example, a hollow brick 10 at the upper layer is embedded into a hollow brick 10' at the lower layer with their grooves 11, 13 and rib 12, 14 joining together and cement mortar, adhesive material or similar binder applied in each gap 17 between a groove and a corresponding rib. Based on a non-planar corresponding relationship between an upper hollow brick 10 and a lower hollow brick 10' in design, outside rain neither permeates a wall nor humidifies indoor space. To further intensify stability of stacked hollow bricks, each hollow brick 10 comprises a junction surface developed on the bottom surface and matching the top surface's topography and a pair of concave dovetail slots 15, 16, which symmetrically correspond to each other and are opened on default positions of top and bottom surfaces, respectively. In a green-material light-partition earthenware brick, each hollow brick 10 comprises dovetail slots 15, 16 located at centers of top and bottom surfaces and corresponding to each other. The dovetail slot 15 on the top surface of a hollow brick 10 has oblique guide planes at two edges of each end by which an elongate connecting rod 20 (for example, steel bar, building material, clinch stud, wall anchor, etc.) is easily placed into the dovetail slot 15; the dovetail slot 16 on the bottom surface of a hollow brick 10' laid from above is covered on the connecting rod 20. As such, the hollow bricks 10, 10' vertically stacked as upper and lower layers are combined with each other securely based on the concave grooves 11, 13 and the matched convex ribs 12, 14 as well as the connecting rod 20 held inside the dovetail slot 15 and the corresponding dovetail slot 16.

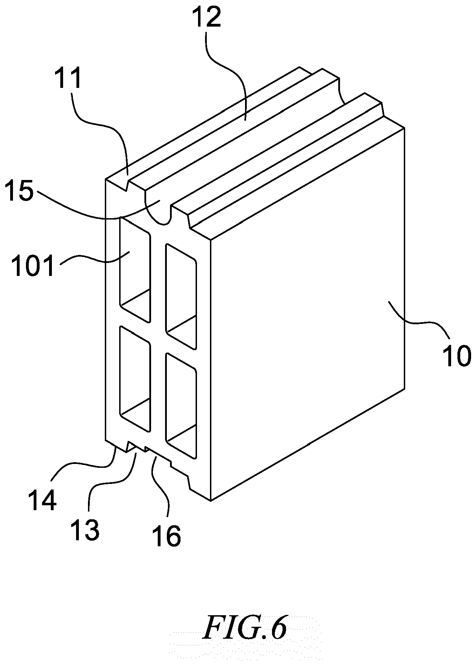

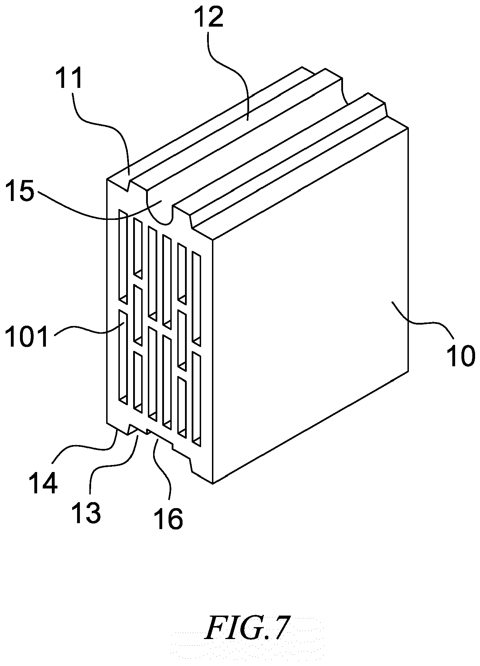

A string of hollow bricks 10 and a string of hollow bricks 10", each of which are linked lengthwise, are combined with each other by a connecting rod 20, which is manufactured as an elongate pole according to the size of a wall to be constructed, for a wall structure constructed with hollow bricks 10, 10" vertically and horizontally stacked. As shown in FIG. 6 for hollow bricks 10 laid horizontally, a connecting rod 20 connected to two concrete columns 30 at the left-hand side and the right-hand side and further fixed in a ceiling 50 or a floor 60 is embedded into the upmost (lowermost) dovetail slot 15 (16) in which cement or equivalent binder is filled for non-planar combinations of hollow bricks 10 (10") at the upper (lower) layer. As shown in FIG. 7, connecting rods 20 which are held in hollow bricks 10 laid vertically are connected to a concrete column 30 at the left-hand side and a steel beam column 40 at the right-hand side, fixed in both a ceiling 50 and a floor 60, and embedded into upmost and lowermost dovetail slots 15, 16. As such, a wall constructed with hollow bricks 10 laid vertically or horizontally, a concrete column 30, a steel beam column 40, a ceiling 5 and a floor 60, all of which are connected with the connecting rods 20, develop a structure with solid structural strength and better earthquake resistance.

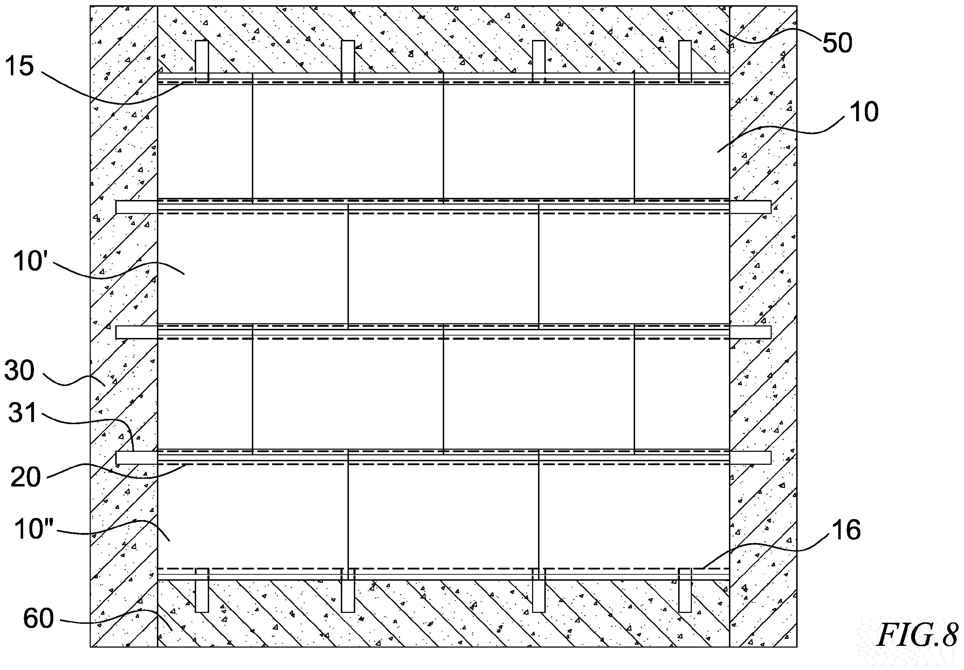

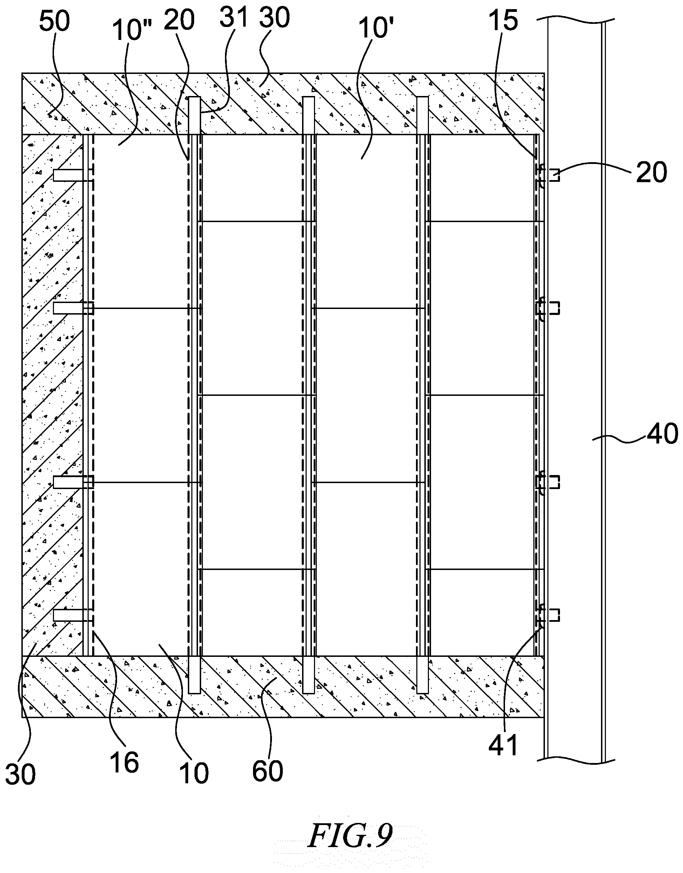

Referring to FIGS. 8 and 9, which illustrate a wall constructed with hollow bricks 10. In addition to the concave grooves 11, 13 and the convex ribs 12, 14 matching each other on surfaces of the hollow bricks 10, the connecting rods 20, which are held in the dovetail slots 15 (lower layers) and the corresponding dovetail slots 16 (upper layers), contribute to fixing the hollow bricks 10, 10' laid vertically as well as the hollow bricks 10, 10' laid horizontally. To integrate and secure a wall and beam columns in a building, each of the connecting rods 20 features its length exceeding a wall's width slightly and is fixed in beam columns in advance so that both ends of the connecting rod 20 protrude from a wall with a default width. As such, both ends of each connecting rod 20 should be inserted into mounting holes 31 or welding passes 41 on a building's beam column or skeleton such as a concrete column 30 or a steel beam column 40 or a wall in the course of bricklaying. Moreover, for solid conjunction between a whole wall and a building's beam columns and better structural strength and earthquake resistance, the connecting rods 20, which have been inserted into a building's beam columns or skeleton for horizontal and vertical combinations of the hollow bricks 10, 10', 10", can be further welded according to materials of beam columns.

It can be seen from above descriptions of a green-material light-partition earthenware brick that a hollow brick 10 made of recycled materials such as surplus earth, sludge derived from drinking water purification, industrial waste sludge, legal sludge, potter's clay and general clay is characteristic of low manufacturing cost, light weight and environment-friendly green building material. The grooves 11, 13 and the matched ribs 12, 14 on top and bottom surfaces of the hollow bricks 10 contribute to not only non-planar bricklaying effect but also a function of preventing permeation of outside water. Additionally, a design of the dovetail slots 15, 16 at top and bottom centers of the hollow bricks 10 for embedding of the elongate connecting rods 20 enhances structural strength and earthquake resistance of a constructed wall without drawbacks existing in or derived from conventional hollow bricks. A green-material light-partition earthenware brick in the present disclosure has advantages as follows:
1. The hollow bricks 10 with concave grooves and convex ribs are staggered and stacked on one another and securely fixed for construction of a wall in which the dovetail slots 15, 16 and the gaps 17 in each hollow brick 10 are filled with cement mortar or equivalent binder and connecting rods 20 for better tensile strength and earthquake resistance effect due to circumferential connecting rods 20 linking a concrete column 30, a steel beam column 40, a ceiling 50 and a floor 60.
2. With concave grooves and convex ribs on top and bottom surfaces aligned correctly, the hollow bricks can be easily and quickly stacked and laid along vertical and horizontal directions by any amateur worker for better efficiency than a conventional bricklaying process, economy of cement mortar or binder by 70% or more, and less carbon emission.
3. No light-partition earthenware brick is infiltrated by rain water, which is discharged from concave grooves and convex ribs on top and bottom surfaces of each hollow brick directly, for no generation of efflorescence.

In summary, green-material light-partition earthenware bricks as environment-friendly building materials for innovative structural design perform well in combinations of bricks, structural strength and earthquake resistance of a wall constructed with the bricks and feature better industrial applications and practical values without drawbacks of conventional counterparts. Therefore, a green-material light-partition earthenware brick which is taken as an ideal and innovative design is applied for the patent.

## Claims

1. A green-material light-partition earthenware brick (10), made of sludge in a molding process, comprising a plurality of hollow cores (101), configured to coordinate a plurality of elongate connecting rods (20) for development of a wall constructed between a building's two beam columns or in a building's skeleton, wherein the hollow brick comprises concave grooves (11) and convex ribs (12) staggered on top and bottom surfaces and matching ribs (14) and grooves (13) of another hollow brick and slots corresponding to each other at top and bottom centers so that hollow bricks stacked as upper and lower layers are securely combined with the concave grooves (11) and the convex ribs (12) matching each other, binder applied in between, **characterized in that** said slots are dovetail slots (15, 16), wherein the elongate connecting rods (20) are configured to be held in the corresponding dovetail slots (15, 16) for vertical and horizontal combinations of hollow bricks laid on upper and lower layers and connected lengthwise and development of a wall joining main beam columns.

2. A green-material light-partition earthenware brick as claimed in claim 1 wherein each of the grooves or the ribs on top and bottom surfaces of the hollow brick comprises oblique guide planes at both sides.

3. A green-material light-partition earthenware brick as claimed in claim 1 wherein each of the grooves or the ribs on top and bottom surfaces of the hollow brick comprises circular or square chamfers or chamfers with other shapes at both sides.

4. A green-material light-partition earthenware brick as claimed in claim 1 wherein the dovetail slot at the center of a top surface of the hollow brick comprises oblique guide planes at two edges of each end.

5. A green-material light-partition earthenware brick as claimed in claim 1 wherein the elongate connecting rod, which features a length greater than a wall's width, has two ends extruding from a wall and inserted into mounting holes opened on beam columns at both sides or the connecting rod is shortened and placed between and connected to beam columns and light-partition earthenware bricks or placed between and connected to light-partition earthenware bricks.

6. A green-material light-partition earthenware brick as claimed in claim 1 wherein green-material light-partition earthenware bricks, which are made of sludge (mass fraction: more than 50%) and clay (mass fraction: less than 50%) as raw materials pulverized and mixed first, are derived from green bodies manufactured by a vacuum extruder in a compression molding process and further sintered in a tunnel kiln at 1000∼1300°C.

7. A green-material light-partition earthenware brick as claimed in claim 1 wherein green-material light-partition earthenware bricks, which are made of sludge and potter's clay (mass fraction: more than 50%) and clay (mass fraction: less than 50%) as raw materials pulverized and mixed first, are derived from green bodies manufactured by a vacuum extruder in a compression molding process and further sintered in a tunnel kiln at 1000∼1300 ° C.

8. A green-material light-partition earthenware brick as claimed in claim 1 wherein the sludge has main ingredients of silica (SiO₂), aluminum oxide (Al₂O₃) and ferric oxide (Fe₂O₃), all of which account for 70%∼90% approximately.

## Patentansprüche

1. - Steingutziegel aus Grünmaterial für leichte Trennwände (10), hergestellt aus Schlamm in einem Formungsprozess, umfassend eine Vielzahl von hohlen Kernen (101), konfiguriert, um eine Vielzahl von verlängerten Verbindungsstangen (20) zu Entwicklung einer Wand zu koordinieren, die zwischen zwei Trägerstützen eines Gebäudes oder im Gerüst eines Gebäudes konstruiert ist, wobei der hohle Ziegel konkave Rillen (11) und konvexe Rippen (12), die auf oberen und unteren Flächen gestaffelt sind, und passende Rippen (14) und Nuten (13) eines anderen hohlen Ziegels und Schlitze, die einander an oberen und unteren Mittelpunkten entsprechen, umfasst, so dass hohle Ziegel, die als obere und untere Schichten gestapelt sind, sicher mit den konkaven Rillen (11) und konvexen Rippen (12), die zueinander passen, kombiniert sind, wobei ein Bindemittel zwischen ihnen angewendet ist, **dadurch gekennzeichnet, dass** die Schlitze Schwalbenschwanzschlitze (15, 16) sind, wobei die verlängerten Verbindungsstangen (20) konfiguriert sind, um in den entsprechenden Schwalbenschwanzschlitzen (15, 16) für vertikale und horizontale Kombinationen von hohlen Ziegeln, die auf obere und untere Schichten gelegt und und der Länge nach verbunden sind, und die Entwicklung einer Wand, die Hautträgerstützen verbindet, gehalten zu werden.

2. - Steingutziegel aus Grünmaterial für leichte Trennwände nach Anspruch 1, wobei jede der Nuten oder der Rippen auf oberen und unteren Flächen des hohlen Ziegels schräge Führungsebenen auf beiden Seiten umfasst.

3. - Steingutziegel aus Grünmaterial für leichte Trennwände nach Anspruch 1, wobei jede der Nuten oder der Rippen auf oberen und unteren Flächen des hohlen Ziegels kreisförmige oder quadratische Abschrägungen oder Abschrägungen mit anderen Formen an beiden Seiten umfasst.

4. - Steingutziegel aus Grünmaterial für leichte Trennwände nach Anspruch 1, wobei der Schwalbenschwanzschlitz am Mittelpunkt der oberen Fläche des hohlen Ziegels schräge Führungsebenen an zwei Kanten jedes Endes umfasst.

5. - Steingutziegel aus Grünmaterial für leichte Trennwände nach Anspruch 1, wobei die verlängerte Verbindungsstange die eine Länge zeigt, die größer als die Breite der Wand ist, zwei Enden aufweist, die sich von einer Wand ausweiten und in Montagelöcher eingeführt sind, die auf Trägerstützen an beiden Seiten geöffnet sind, oder die Verbindungsstange gekürzt und zwischen Trägerstützen und Steingutziegel für leichte Trennwände platziert und mit denselben verbunden ist oder zwischen Steingutziegeln für leichte Trennwände platziert oder mit denselben verbunden ist.

6. - Steingutziegel aus Grünmaterial für leichte Trennwände nach Anspruch 1, wobei Steingutziegel aus Grünmaterial für leichte Trennwände, die aus Schlamm (Massenfraktion: mehr als 50 %) und Ton (Massenfraktion: weniger als 50 %) als Rohmaterialien hergestellt sind, die zuerst pulversisiert und gemischt werden, aus grünen Körpern, die durch einen Vakuumextruder in einem Kompressionsformungsprozess produziert und weiter in einem Tunnelofen bei 1000 - 1300°C gesintert werden, abgeleitet sind.

7. - Steingutziegel aus Grünmaterial für leichte Trennwände nach Anspruch 1, wobei Steingutziegel aus Grünmaterial für leichte Trennwände, die aus Schlamm und Töpferton (Massenfraktion: mehr als 50 %) und Ton (Massenfraktion: weniger als 50 %) als Rohmaterialien hergestellt sind, die zuerst pulversisert und gemischt werden, aus grünen Körpern, die durch einen Vakuumextruder in einem Kompressionsformungsprozess produziert und weiter in einem Tunnelofen bei 1000 - 1300°C gesintert werden, abgeleitet sind.

8. - Steingutziegel aus Grünmaterial für leichte Trennwände nach Anspruch 1, wobei der Schlamm Hauptbestandteile von Siliziumoxid (SiO₂), Aluminiumoxid (Al₂O₃) und Eisenoxid (Fe₂O₃) aufweist, von denen alle ungefähr 70 % - 90 % ausmachen.

## Revendications

1. - Brique de terre cuite en matériau écologique pour la construction de cloisons légères (10), faite de boues dans un processus de moulage, comprenant une pluralité d'âmes creuses (101), configurée pour coordonner une pluralité de tiges de liaison allongées (20) pour le développement d'une paroi construite entre deux poutres-colonnes d'un bâtiment ou dans le squelette d'un bâtiment, la brique creuse comprenant des rainures concaves (11) et des nervures convexes (12) décalées sur des surfaces supérieure et inférieure et des rainures (13) et nervures (14) correspondantes d'une autre brique creuse, et des fentes correspondant les unes aux autres au niveau de centres supérieur et inférieur de telle sorte que des briques creuses empilées en couches supérieure et inférieure sont combinées de manière sûre avec les rainures concaves (11) et les nervures convexes (12) mises en correspondance les unes avec les autres, un liant étant appliqué entre elles, **caractérisée par le fait que** lesdites fentes sont des fentes en queue d'aronde (15, 16), les tiges de liaison allongées (20) étant configurées pour être maintenues dans les fentes en queue d'aronde correspondantes (15, 16) pour des combinaisons verticale et horizontale de briques creuses déposées sur des couches supérieure et inférieure et reliées longitudinalement et le développement d'une paroi reliant des poutres-colonnes principales.

2. - Brique de terre cuite en matériau écologique pour la construction de cloisons légères selon la revendication 1, dans laquelle chacune des rainures ou des nervures sur des surfaces supérieure et inférieure de la brique creuse comprend des plans de guidage obliques sur les deux côtés.

3. - Brique de terre cuite en matériau écologique pour la construction de cloisons légères selon la revendication 1, dans laquelle chacune des rainures ou des nervures sur des surfaces supérieure et inférieure de la brique creuse comprend des chanfreins circulaires ou carrés ou des chanfreins ayant d'autres formes sur les deux côtés.

4. - Brique de terre cuite en matériau écologique pour la construction de cloisons légères selon la revendication 1, dans laquelle la fente en queue d'aronde au centre d'une surface supérieure de la brique creuse comprend des plans de guidage obliques à deux bords de chaque extrémité.

5. - Brique de terre cuite en matériau écologique pour la construction de cloisons légères selon la revendication 1, dans laquelle la tige de liaison allongée, qui a une longueur supérieure à la largeur d'une paroi, a deux extrémités faisant saillie d'une paroi et introduites dans des trous de montage ouverts sur des poutres-colonnes sur les deux côtés ou la tige de liaison est raccourcie et placée entre et reliée à des poutres-colonnes et des briques de terre cuite pour la construction de cloisons légères ou placée entre et reliée à des briques de terre cuite pour la construction de cloisons légères.

6. - Brique de terre cuite en matériau écologique pour la construction de cloisons légères selon la revendication 1, dans laquelle des briques de terre cuite en matériau écologique pour la construction de cloisons légères, qui sont faites de boues (fraction massique : plus de 50 %) et d'argile (fraction massique : moins de 50 %) comme matières premières pulvérisées et mélangées en premier, sont issues de corps verts fabriqués par une extrudeuse à vide dans un processus de moulage par compression, puis frittées dans un four tunnel à 1000∼1300 °C.

7. - Brique de terre cuite en matériau écologique pour la construction de cloisons légères selon la revendication 1, dans laquelle des briques de terre cuite en matériau écologique pour la construction de cloisons légères, qui sont faites de boues et d'argile de potier (fraction massique : plus de 50 %) et d'argile (fraction massique : moins de 50 %) comme matières premières pulvérisées et mélangées en premier, sont issues de corps verts fabriqués par une extrudeuse à vide dans un processus de moulage par compression, puis frittées dans un four tunnel à 1000∼1300 °C.

8. - Brique de terre cuite en matériau écologique pour la construction de cloisons légères selon la revendication 1, dans laquelle les boues ont des ingrédients principaux de silice (SiO₂), d'oxyde d'aluminium (Al₂O₃) et d'oxyde de fer (Fe₂O₃), représentant tous ensemble approximativement 70 % à 90 %.
